# FASCICULE DE BREVET EUROPEEN

(11) **EP 4 437 332 B1**
(45) Date de publication et mention de la délivrance du brevet: **05.08.2026**
(21) Numéro de dépôt: 22818025.3
(22) Date de dépôt: 16.11.2022
(51) Int. Cl.: G01N 21/91

(54) **SYSTEME ET PROCEDE DE VALIDATION AUTOMATIQUE DE LA CONFORMITE DE REPONSE D'UNE CHAINE DE RESSUAGE**
SYSTEM UND VERFAHREN ZUR AUTOMATISCHEN ÜBERPRÜFUNG DER ANTWORT EINER ANLAGE ZUR DURCHFÜHRUNG EINES EINDRINGVERFAHRENS
SYSTEM AND METHOD FOR AUTOMATICALLY VALIDATING THE RESPONSE COMPLIANCE OF A PENETRANT TESTING LINE

(30) Priorité: 22.11.2021 FR 2112317
(43) Date de publication de la demande: 02.10.2024
(73) Titulaire: Safran Helicopter Engines, 64510 Bordes (FR)
(72) Inventeur: BRIFFA, Patrick Lucien François, 77550 Moissy Gramayel (FR); JULIAC, Etienne, 77550 Moissy Gramayel (FR); GUAZZONE, Laurent Jean-Pascal, 77550 Moissy Gramayel (FR)
(74) Mandataire: Casalonga
(86) Numéro de dépôt international: PCT/EP2022/082156
(87) Numéro de publication internationale: WO 2023/088974

(56) Documents cités:
- EP-A1- 1 780 534
- DE-A1- 19 527 446
- DE-U1- 8 608 690
- JP-A- S6 371 642
- SCHUSTER V ET AL: "Automatische Überwachung der Anzeigefähikeit des Magnetpulver-Prüfmittels mit Fluxa-Control", INTERNET CITATION, 19 February 2007 (2007-02-19), pages 1 - 10, XP002489347, Retrieved from the Internet <URL:http://www.karldeutsch.de/PDF/Sonderdrucke/SD_3_23%20e%20FLUXA-Control.pdf> [retrieved on 20080722]

## Description

### Domaine technique

La présente invention concerne les méthodes non destructives de vérification et de sanction de la conformité de chaines de ressuage.

Le ressuage vise à détecter de façon non destructive des fissures à la surface d'une pièce par recouvrement de sa surface avec un liquide pénétrant, coloré ou fluorescent, puis à observer la résurgence du liquide à partir des fissures.

La présente invention vise à constituer un système et son procédé pour la validation de chaînes de ressuage de façon non destructive et particulièrement répétable, dans lequel on se prémunit de la variabilité d'analyses humaines, et qui permet la traçabilité des réponses successives des chaînes de ressuage.

### Techniques antérieures

On connaît des méthodes de validation de chaînes de ressuage consistant à faire passer une pièce étalon (cales « PSM-5P » ou « PSM-SP-TAM » par exemple) dans la chaîne de ressuage et à en déduire une sanction en fonction de la réponse de celle-ci.

Les méthodes actuelles laissent la responsabilité de la sanction à un opérateur qui a pour mission de comparer visuellement et qualitativement la cale étalon sortie de la chaine de ressuage avec une image de référence, ce qui peut éventuellement varier suivant son interprétation.

Une approche visant la maitrise de ce procédé conduit à une vérification périodique de la taille des fissures visibles en ressuage qui ne doit pas dériver.

Cette dérive peut être fixée par exemple à un seuil de trente pourcents par rapport aux valeurs observées sur un cale étalon.

Cette étape de validation permet d'autoriser la production série par ressuage.

Dans les méthodes actuelles, le facteur humain constitue donc un facteur de variabilité potentiel, alors que l'enjeu de validation de la chaîne de ressuage doit être sytématiquement respecté pour assurer la conformité du processus et donc la qualité des sanctions appliquées aux pièces contrôlées par ce moyen. Cette approche est cruciale pour une production série.

De plus, la répétabilité et la précision de l'appréciation par l'opérateur peuvent varier puisqu'elles reposent sur une analyse qualitative faite par l'œil de l'opérateur.

L'appréciation visuelle ne permet par ailleurs pas l'archivage de l'ensemble des données ayant permis la sanction qui permettrait la traçabilité de l'étalonnage, par exemple des données d'enregistrement tels que des informations numériques ; l'œil humain ne le permettant pas. Le document EP 1 780 534 A1 divulgue un système de validation automatique de la conformité de réponse d'une chaine de ressuage par l'analyse d'une pièce étalon ressuante à fissures issue de ladite chaine de ressuage. Ledit système comporte ladite pièce étalon ressuante à fissures issue de ladite chaine de ressuage, un socle de positionnement de la pièce étalon ressuante, un dispositif d'éclairage en ultraviolet et une caméra ayant un objectif dirigé vers le socle de positionnement.

### Exposé de l'invention

L'invention a pour but de pallier au moins certains des inconvénients précités et de proposer un système de validation de la réponse d'une chaine de ressuage capable de cumuler des avantages de répétabilité, stabilité et fiabilité pour sa mise en œuvre, tout en permettant une traçabilité de l'établissement de la sanction.

Au vu de ce qui précède, l'invention a pour objet un système de validation automatique de la conformité de réponse d'une chaine de ressuage par l'analyse numérique d'une pièce étalon ressuante à fissures issue de ladite chaine de ressuage, ledit système comportant un boîtier entourant l'ensemble des éléments du système, un socle de positionnement de la pièce étalon ressuante, au moins deux dispositifs d'éclairage en ultraviolet positionnés de part et d'autre du socle de positionnement de manière à pouvoir l'éclairer en lumière ultraviolette, une carte électronique, un guide linéaire motorisé commandé par la carte électronique et adapté pour pouvoir déplacer et maintenir en position le socle de positionnement dans le boîtier, une caméra monochrome ayant un objectif dirigé vers le socle de positionnement.

De préférence, lesdits deux dispositifs d'éclairage en ultraviolet sont inclinés par rapport à la verticale d'un angle compris entre cinquante-quatre et soixante-six degrés.

Par exemple, la caméra est à une distance du socle de positionnement inférieure à vingt centimètres et la caméra a un objectif de soixante-quinze millimètres couplé avec une bague d'allonge optique, adaptés pour fournir une précision d'acquisition optique inférieure à dix micromètres.

Avantageusement, le boîtier est muni d'une porte et d'un capteur de fermeture de porte couplé à la carte électronique.

Selon l'invention, chaque dispositif d'éclairage comporte une diode électroluminescente.

L'invention a également pour objet un procédé de validation pour la mise en œuvre d'un système de validation tel que défini ci-dessus, le procédé comportant les étapes suivantes :
- le placement sur le socle de positionnement d'une pièce étalon ressuante comportant des fissures et issue de ladite chaine de ressuage,
- le ciblage focalisé de la caméra sur les fissures par l'actionnement du guide linéaire motorisé,
- l'éclairage des fissures,
- l'acquisition numérique d'une image des fissures au moyen de la caméra,
- l'enregistrement de ladite image,
- la mesure de dimensions principales de chaque fissure,
- la comparaison dimensionnelle des mesures à des valeurs de référence,
- la sanction de la réponse.

Avantageusement, la durée d'éclairage des fissures est sensiblement égale à la durée d'acquisition de l'image des fissures ; ceci permettant d'éviter les dérives dues aux échauffements des dispositifs d'éclairage.

Le procédé peut prévoir en outre une étape préalable dans laquelle le système fait l'objet d'un étalonnage de référence par surveillance et calibration à l'aide de deux mires de référence de type différents, dont l'une est une mire à lamages adaptée pour étalonner le positionnement fourni par le socle de positionnement et la précision des mesures, et l'autre est une mire de type USAF1951^{©} utilisée pour tester des mesures d'intensité, de dimension et de surface.

De préférence, une étape préalable est prévue, dans laquelle le système fait l'objet d'un étalonnage de référence à partir d'un référencement réalisé sur la base d'une réponse initiale de la chaine de ressuage.

L'invention concerne également un procédé ayant une étape finale d'archivage de l'image, des mesures et de la sanction.

### Brève description des dessins

L'invention sera mieux comprise à l'étude détaillée d'un mode de réalisation pris à titre d'exemple non limitatif et illustré par les dessins annexés, sur lesquels :
[Fig 1] représente un système de validation de chaîne de ressuage selon l'invention, en vue en perspective.
[Fig 2] représente la mire à lamages en vue de face.
[Fig 3] représente une fissure sur la mire à lamages en vue de face.
[Fig 4] représente les étapes du procédé de validation de chaîne de ressuage.

### Description détaillée

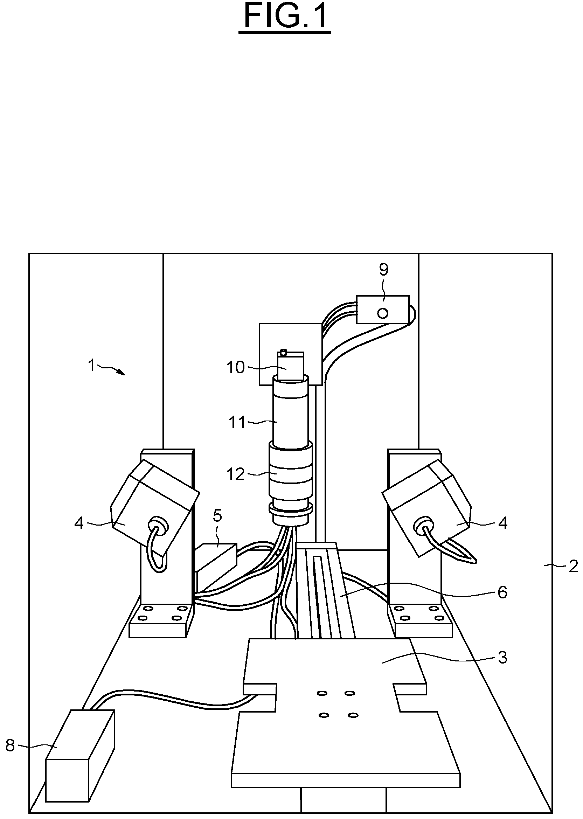

La Figure 1 illustre le système 1 de l'invention, qui permet la validation automatique de la conformité de réponse d'une chaine de ressuage par l'analyse d'une pièce étalon ressuante à fissures issue de ladite chaine de ressuage.

Le système 1 comporte un boîtier 2, un socle de positionnement 3 de la pièce étalon ressuante 13, au moins deux dispositifs d'éclairage 4, une carte électronique située dans un poste informatique, un guide linéaire motorisé 6 commandé par la carte électronique et adapté pour pouvoir déplacer et maintenir en position le socle de positionnement 3 dans le boîtier 2, une caméra monochrome 10 ayant un objectif dirigé vers le socle de positionnement 3.

Une alimentation électrique 5 permet d'alimenter électriquement les composants, notamment les dispositif d'éclairage 4, le guide 6, la carte électronique.

Un interrupteur sectionneur 9 peut être prévu pour couper facilement l'alimentation électrique et arrêter le procédé.

Le boîtier 2 entoure l'ensemble des éléments du système 1 pour pouvoir les mettre dans l'obscurité afin de protéger l'observation des éclairages parasites.

Avantageusement, le boîtier 2 est muni d'une porte de manière à pouvoir l'ouvrir et le fermer avant et après chaque mise en œuvre du procédé décrit ci-après.

Le boîtier 2 peut être muni d'un capteur de fermeture de porte 8 couplé à la carte électroniquepour autoriser ou non la mise en œuvre du procédé en cas de défaut de fermeture de la porte.

La carte électroniquepeut être couplée à un ordinateur permettant le traitement d'images, les affichages et archivage des images de prises de vues et les réponses.

Les deux dispositif d'éclairage 4 sont positionnés de part et d'autre du socle de positionnement 3 et en surplomb de manière à pouvoir l'éclairer par un éclairage vers le bas, ce qui fournit un flux localisé, orientable et inclinable, avec une homogénéité de part et d'autre du socle de positionnement 3.

Ils éclairent en lumière ultraviolette, plus particulièrement avec un spectre ultraviolet centré sur la longueur d'onde de trois-cent-soixante-cinq nanomètres pour réponse optimale du pénétrant utilisé pour le ressuage.

Chaque dispositif d'éclairage 4 comporte une diode électroluminescente, ce qui rend l'éclairage opérationnel instantanément, permettant d'éviter le temps de chauffe et de donner un flux lumineux stable, c'est-à-dire dont la puissance ne varie quasiment pas au cours du temps.

De préférence, les deux dispositifs d'éclairage en ultraviolet 4 sont inclinés par rapport à la verticale d'un angle compris entre cinquante-quatre et soixante-six degrés.

Cette inclinaison des spots définit l'angle d'incidence lumineuse sur le socle de positionnement 3 qui donne le rapport entre le signal et le bruit le plus élevé dans la gamme d'inclinaison testée entre trente et soixante-dix degrés.

Il est nécessaire d'avoir un angle d'inclinaison supérieur à quarante-cinq degrés.

Le meilleur positionnement est obtenu avec un angle d'inclinaison autour de soixante degrés.

La caméra 10 est préférentiellement à une distance du socle de positionnement 3 inférieure à vingt centimètres et la caméra 10 a un objectif de soixante-quinze millimètres 11 couplé avec une bague d'allonge optique, adaptés pour fournir une précision d'acquisition optique inférieure à dix micromètres.

Un filtre passe-bande 12 peut être prévu pour augmenter encore cette précision d'acquisition.

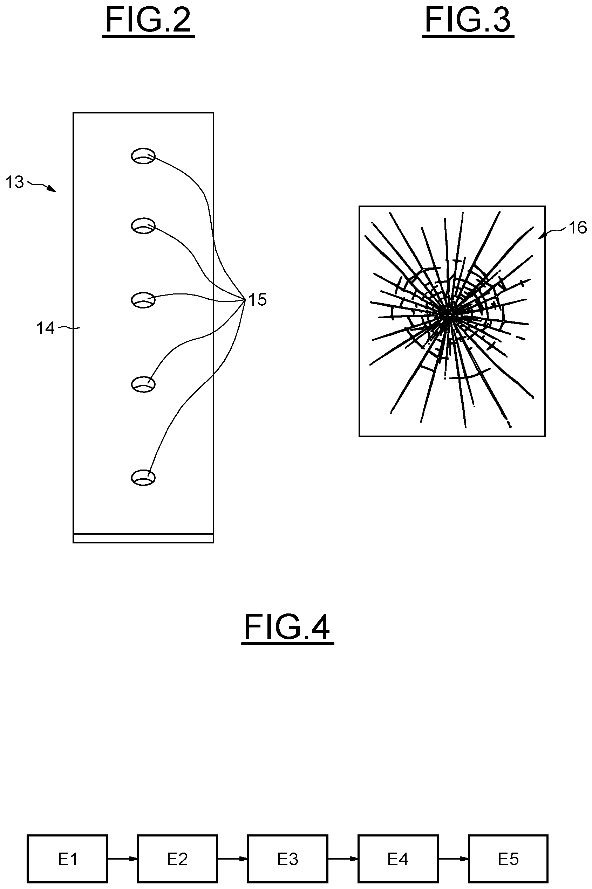

Comme illustré par la Figure 2, la pièce étalon ressuante est par exemple recouverte d'une mire à lamage 13 qui comporte un corps 14 ayant des dimensions standard et/ou normées, et cinq perçages 15 permettant que le procédé cible cinq zones critiques de la cale contenant des indications qui sont décisives à la sanction de la chaine de ressuage.

Le système 1 va éclairer toutes les zones, comme illustré par la Figure 2, puis analyser, mesurer et sanctionner en autonomie ces cinq zones de la cale étalon, par exemple avec un avancement zone par zone.

Comme illustré par la Figure 2, la pièce étalon ressuante est par exemple une cale qui comporte un corps 14 ayant des dimensions standard et/ou normées, et le procédé cible cinq zones critiques de la cale contenant des indications qui sont décisives à la sanction de la chaine de ressuage.

Le système 1 éclaire toutes les zones, comme illustré par la Figure 2, puis analyse, mesure et sanctionne en autonomie ces cinq zones 15 de la cale étalon , par exemple avec un avancement zone par zone.

La cale comporte par exemple des fissures 16 telles que celles illustrées par la Figure 3, constituant des indications en forme d'étoiles pour le système 1.

Les indications 16 sont par exemple de diamètres décroissants de haut en bas, avec la dimension de la plus grande pouvant atteindre jusqu'à six virgule trois millimètres, et en moyenne de cinq millimètres de diamètre pour l'ensemble des fisures étoilées 16 avant rajout d'une marge de positionnement à ce diamètre.

Différentes cales étalons peuvent être utilisées avec des dimensions différentes pour les indications 16.

Elles sont donc uniques et un référencement doit être effectué à chaque changement de cale .

Pour que les programmes de vérification puissent donner une sanction après inspection, il faut aussi les lier à des exigences, qui dépendent des caractéristiques de la cale étalon initiale, de la performance de la chaine de ressuage le jour de la calibration, et de l'appréciation du niveau de ressuage après analyse de la cale ressuée.

Le procédé de mise en œuvre est illustré par la Figure 4 rend ces étapes particulièrement répétables par rapport aux méthodes connues, grâce aux étapes suivantes :
- une première étape E1 de placement sur le socle de positionnement 3 d'une pièce étalon ressuante comportant des fissures 16 et issue de ladite chaine de ressuage,
- une étape E2 de ciblage focalisé de la caméra 10 sur les fissures 16 par l'actionnement du guide linéaire motorisé 6,
- une étape E3 d'éclairage des fissures 16,
- une étape E4 d'acquisition numérique d'une image des fissures 16 grâce à la caméra 10,
- au moyen de la carte électronique, une étape E5 consistant en :
   - l'enregistrement de ladite image,
   - la mesure de dimensions principales de chaque fissure 16,
   - la comparaison dimensionnelle des mesures à des valeurs de référence, et
   - la sanction de la réponse
est mise en œuvre.

Le guide 6 est couplé à un protocole de calibrage du positionnement du socle de positionnement 3 de façon à assurer le bon positionnement mécanique de la cale PSM-5P dans le système 1.

Ce protocole de calibrage rejoint les protocoles traditionnels connus propres aux machines industrielles à déplacement mécanique, avec des précisions de positionnement recherchées correspondant aux exigences réglementaires fixées.

Avantageusement, la durée d'éclairage des fissures 16 en étape E3 est sensiblement égale à la durée d'acquisition de l'image des fissures 16.

En effet, il a été constaté un échauffement léger des systèmes d'éclairage 4, même s'ils comportent un émetteur à diode électroluminescente qui minimise la chaleur émise.

Cette chaleur déplace le pic fréquentiel du spectre d'émission ultraviolet de quelques nanomètres au cours du temps en suivant une tendance logarithmique.

Il est important de noter que ce phénomène reste imperceptible à l'œil et difficilement détectable à moins d'utiliser un dispositif suffisamment sensible tels qu'une cellule de prise d'image ou un capteur adéquat.

En conséquence, du fait de ce phénomène, la fluorescence du pénétrant, sensible à une longueur d'ondes centrée à trois-cent-soixante-cinq nanomètres, devient moins intense malgré la puissance constante de l'éclairage.

Pour pallier cet effet, l'éclairage peut être activé en étape E3 sur une très courte durée de type « flash » synchronisée sur la seule durée d'acquisition de l'image, ce qui permet d'éviter l'échauffement de l'émetteur à diode électroluminescente et de conserver constante la longueur d'onde à laquelle est émise la valeur d'énergie maximale donnant, ainsi un signal optimal et stable.

A l'étape E4, l'acquisition d'image est optimisée grâce à une analyse matricielle en deux dimensions dans laquelle on observe en longueur et en largeur seulement la cale installée sur le socle de positionnement 3.

L'acquisition en monochrome se fait avec une seule couleur observée par une analyse en niveaux de gris, ce qui améliore la précision des observations.

Les zones 15 sont de l'ordre de dix millimètres par dix millimètres autour de chaque étoile 16 de la cale, ce qui nécessite une matrice de deux mille pixels par deux mille pixels.

La distance entre la camera et la cale est préférentiellement inférieure à vingt centimètres.

La précision d'acquisition est inférieure à dix micromètres pour quantifier et sanctionner correctement la cinquième indication 16, à savoir la plus petite, car sa dimension diamètrale maximale peut descendre jusqu'à quatre cents micromètres, même si en moyenne elle fait généralement environ un millimètres de diamètre.

Pour avoir une précision de dix micromètres ou meilleure, il est avantageux d'échantillonner sur deux pixels au minimum, ce qui donne une résolution de cinq micromètres par pixel.

L'échantillonage est optimal sur quatre pixels, ce qui donne une résolution de deux micromètres et demi par pixel.

En utilisation régulière de l'installation, le système 1 a pour but de confirmer automatiquement la sanction correspondant à un bon niveau de réponse de la chaine de ressuage en comparant l'analyse d'une cale PSM-5P passée en chaine avec celle servant de référence initiale.

Cette référence initiale a été obtenue avec la même cale PSM-5P dont la réponse a été enregistrée lors de la validation initiale de la chaine pour sa mise en service sur la base d'une réponse en ressuage jugée satisfaisante par le responsable de la mise en œuvre de l'installation.

De préférence, une étape préalable est mise en œuvre, dans laquelle le système 1 fait l'objet d'un étalonnage de référence à partir d'un référencement réalisé sur la base d'une réponse initiale de la chaine de ressuage.

Le procédé de mise en œuvre du système 1 peut prévoir en outre une étape amont dans laquelle le système 1 fait l'objet d'un étalonnage de référence par surveillance et calibration à l'aide de deux mires de référence de type différents.

L'une des deux mires de référence est une mire à lamages 13 adaptée pour étalonner le positionnement fourni par le socle de positionnement 3 et la précision des mesures.

Cette mire à lamage 13 permet de vérifier le bon positionnement mécanique de la cale PSM-5P dans le système 1 et le bon étalonnage de la mesure des diamètres des indications circulaires 16 par l'intermédiaire d'un algorithme prévu dans la carte électronique et sous l'éclairage ultraviolet.

Les vérifications à l'aide de la mire à lamages 13 permettent donc de s'assurer de l'absence de dérive de la mécanique et cinématique du système 1, mais aussi d'une mesure exacte des étoiles 16 révélées en réponse du ressuage, car la mire à lamages 13 permet une quantification adéquate des indications en étoile sur la cale PSM-5P quelles que soient leur géométrie et leur taille, leur signature variant en fonction de la forme plutôt ronde sans branches pour l'étoile 16 la plus petite, et des branches fortement marquées pour la première étoile, avec un facteur d'échelle proche de vingt entre ces deux étoiles.

L'autre des deux mires de référence est une mire de type USAF1951^{©} utilisée pour tester des mesures d'intensité, de dimension et de surface.

L'utilisation de cette mire standard comme cible de résolution permet le calcul d'intensité (rapport signal/bruit) ainsi que l'évaluation du nombre de pixels, et la vérification permet de s'assurer de la stabilité des valeurs calculées.

Grâce aux deu mires, on obtient ainsi un système 1 qui permet d'éviter les éventuelles dérives intrinsèques du système 1, et ce grâce à, en outre, une surveillance du positionnement mécanique des cales, une surveillance des moyens de prise optique, et une surveillance de l'algorithme de traitement d'images et d'édition de la sanction automatique prévu dans la carte électronique.

La norme technique générale spécifiant le procédé de ressuage tolère trente pourcents de variabilité annuelle sur les mesures des valeurs des diamètres des indications observées sur une cale, le système 1 permettant de réaliser cette mesure de façon automatique quotidiennement.

Le système 1 à une variabilité maximale intrinsèque de l'ordre de deux pourcents, c'est-à-dire de l'ordre de l'incertitude de mesure, ce qui est satisfaisant pour le déclarer capable.

La sanction de la réponse de la chaine de ressuage peut s'appuyer uniquement sur les mesures de diamètre des étoiles 16 de la cale, après seuillage sur les niveaux de gris, sans obligatoirement devoir tenir compte de l'histogramme de répartition des niveaux de gris ni du nombre de pixel pour la sanction de conformité de la réponse de la chaine de ressuage, et l'histogramme des niveaux de gris et le nombre de pixels peuvent cependant continuer d'être suivies à titre indicatif afin de permettre de contrôler et maitriser avec plus de précision et de réactivité d'éventuelles dérives de la chaine de ressuage dans le temps.

Le procédé peut comporter une étape finale d'archivage de l'image, des mesures et de la sanction.

Contrairement aux méthodes connues, le système 1 permet donc l'enregistrement des images des cinq zones ainsi que des valeurs de l'inspection, ce qui en permet la traçabilité totale et fiable, puisque numérique.

## Revendications

1. Système (1) de validation automatique de la conformité de réponse d'une chaine de ressuage par l'analyse d'une pièce étalon ressuante à fissures issue de ladite chaine de ressuage, ledit système (1) comportant ladite pièce étalon ressuante à fissures issue de ladite chaine de ressuage, un boîtier (2) entourant l'ensemble des éléments du système (1), un socle de positionnement (3) de la pièce étalon ressuante, au moins deux dispositifs d'éclairage en ultraviolet (4) positionnés de part et d'autre du socle de positionnement (3) de manière à pouvoir l'éclairer en lumière ultraviolette, une carte électronique, un guide linéaire motorisé (6) commandé par la carte électronique et adapté pour pouvoir déplacer et maintenir en position le socle de positionnement (3) dans le boîtier (2), une caméra monochrome (10) ayant un objectif dirigé vers le socle de positionnement (3), dans lequel chaque dispositif d'éclairage (4) comporte une diode électroluminescente.

2. Système (1) selon la revendication 1, dans lequel lesdits deux dispositifs d'éclairage en ultraviolet (4) sont inclinés par rapport à la verticale d'un angle compris entre cinquante-quatre et soixante-six degrés.

3. Système (1) selon l'une quelconque des revendications 1 et 2, dans lequel la caméra (10) est à une distance du socle de positionnement (3) inférieure à vingt centimètres et la caméra (10) a un objectif de soixante-quinze millimètres (11) couplé avec une bague d'allonge optique, adaptés pour fournir une précision d'acquisition optique inférieure à dix micromètres.

4. Système (1) selon l'une quelconque des revendications précédentes, dans lequel le boîtier (2) est muni d'une porte et d'un capteur de fermeture de porte (8) couplé à la carte électronique.

5. Procédé de validation de la conformité de réponse d'une chaine de ressuage pour la mise en œuvre d'un système selon l'une quelconque des revendications 1 à 4, comportant les étapes suivantes :
- le placement (E1) sur le socle de positionnement (3) d'une pièce étalon ressuante comportant des fissures (16) et issue de ladite chaine de ressuage,
- le ciblage (E2) focalisé de la caméra (10) sur les fissures (16) par l'actionnement du guide linéaire motorisé (6),
- l'éclairage (E3) des fissures (16),
- l'acquisition numérique (E4) d'une image des fissures (16) au moyen de la caméra (10),
- l'enregistrement de ladite image,
- la mesure de dimensions principales de chaque fissure (16),
- la comparaison dimensionnelle des mesures à des valeurs de référence,
- la sanction de la réponse.

6. Procédé selon la revendication 5, dans lequel la durée d'éclairage des fissures (16) est sensiblement égale à la durée d'acquisition de l'image des fissures (16).

7. Procédé selon l'une quelconque des revendications 5 et 6, comportant en outre une étape préalable dans laquelle le système (1) fait l'objet d'un étalonnage de référence par surveillance et calibration à l'aide de deux mires de référence de type différents, dont l'une est une mire à lamages (13) adaptée pour étalonner le positionnement fourni par le socle de positionnement (3) et la précision des mesures, et l'autre est une mire de type USAF1951^{©} utilisée pour tester des mesures d'intensité, de dimension et de surface.

8. Procédé selon l'une quelconque des revendications 5 à 7, comportant en outre une étape préalable dans laquelle le système (1) fait l'objet d'un étalonnage de référence à partir d'un référencement réalisé sur la base d'une réponse initiale de la chaine de ressuage.

9. Procédé selon l'une quelconque des revendications 5 à 8, comportant en outre une étape finale d'archivage de l'image, des mesures et de la sanction.

## Patentansprüche

1. System (1) zur automatischen Validierung der Übereinstimmung der Antwort einer Durchdringungskette durch die Analyse eines Resonanz-Standardteils mit Rissen aus der Durchdringungskette, wobei das System (1) das Resonanz-Standardteil mit Rissen aus der Durchdringungskette, ein Gehäuse (2), das alle Elemente des Systems (1) umgibt, einen Positionierungssockel (3) für das Resonanz-Standardteil mit Rissen, mindestens zwei UV-Beleuchtungsvorrichtungen (4) auf beiden Seiten des Positionierungssockels (3), die so positioniert sind, dass sie diesen mit ultraviolettem Licht beleuchten können, eine elektronische Karte, eine motorisierte Linearführung (6), die von der elektronischen Karte gesteuert wird und ausgelegt ist, um den Positionierungssockel (3) im Gehäuse (2) bewegen und in Position halten zu können, und eine monochrome Kamera (10) aufweist, die ein auf dem Positionierungssockel (3) gerichtetes Objektiv aufweist, wobei jede Beleuchtungsvorrichtung (4) eine Leuchtdiode aufweist.

2. System (1) nach Anspruch 1, wobei die beiden UV-Beleuchtungsvorrichtungen (4) um einen Winkel zwischen vierundfünfzig und sechsundsechzig Grad gegenüber der Senkrechten geneigt sind.

3. System (1) nach einem der Ansprüche 1 und 2, wobei die Kamera (10) sich in einem Abstand von weniger als zwanzig Zentimetern vom Positionierungssockel (3) befindet und die Kamera (10) ein Objektiv von fünfundsiebzig Millimetern (11) aufweist, das mit einem optischen Verlängerungsring gekoppelt ist, wobei diese so ausgelegt sind, dass sie eine optische Erfassungsgenauigkeit von weniger als zehn Mikrometern gewährleisten.

4. System (1) nach einem der vorhergehenden Ansprüche, wobei das Gehäuse (2) mit einer Tür und einem Türschließsensor (8) ausgestattet ist, der mit der elektronischen Karte gekoppelt ist.

5. Verfahren zur Validierung der Übereinstimmung der Antwort einer Durchdringungskette für die Implementierung eines Systems nach einem der Ansprüche 1 bis 4, das die folgenden Schritte aufweist:
- das Platzieren (E1) auf dem Positionierungssockel (3) eines Resonanz-Standardteils, das Risse (16) aufweist und aus der Durchdringungskette stammt,
- das Fokussieren (E2) der Kamera (10) auf die Risse (16) durch Betätigung der motorisierten Linearführung (6),
- das Beleuchten (E3) der Risse (16),
- das digitale Erfassen (E4) eines Bildes der Risse (16) mittels der Kamera (10),
- das Aufzeichnen des Bildes,
- das Messen der Hauptabmessungen jedes Risses (16),
- das dimensionale Vergleichen der Messwerte mit Referenzwerten,
- das Sanktionieren der Antwort.

6. Verfahren nach Anspruch 5, wobei die Dauer des Beleuchtens der Risse (16) im Wesentlichen gleich der Dauer des Erfassens des Bildes der Risse (16) ist.

7. Verfahren nach einem der Ansprüche 5 und 6, das weiter einen vorbereitenden Schritt aufweist, bei dem das System (1) einer Referenzkalibrierung durch Überwachen und Kalibrieren mithilfe von zwei Referenzmustern unterschiedlichen Typs unterzogen wird, von denen das eine ein Nutmuster (13) ist, das zum Kalibrieren der vom Positionierungssockel (3) bereitgestellten Positionierung und der Messgenauigkeit ausgelegt ist, und das andere ein Muster vom Typ USAF1951^{©} ist, das zum Prüfen von Intensitäts-, Dimensions- und Flächenmessungen verwendet wird.

8. Verfahren nach einem der Ansprüche 5 bis 7, das weiter einen vorbereitenden Schritt aufweist, bei dem das System (1) anhand einer Referenzierung, die auf der Grundlage einer anfänglichen Antwort der Durchdringungskette durchgeführt wird, einer Referenzkalibrierung unterzogen wird.

9. Verfahren nach einem der Ansprüche 5 bis 8, das weiter einen letzten Schritt des Archivierens des Bildes, des Messens und des Sanktionierens aufweist.

## Claims

1. System (1) for automatically validating the response compliance of a penetrant testing line by the numerical analysis of a reference test specimen with cracks undergoing dye penetrant testing coming from said penetrant testing line, said system (1) including said reference test specimen with cracks undergoing dye penetrant testing coming from said penetrant testing line, a casing (2) surrounding all the elements of the system (1), a positioning base (3) for the reference test specimen undergoing dye penetrant testing, at least two ultraviolet lighting devices (4) positioned on either side of the positioning base (3) so as to be able to illuminate it with ultraviolet light, an electronic board, a motorised linear guide (6) controlled by the electronic board and suitable for being able to move the positioning base and hold said positioning base (3) in position in the casing (2), and a monochrome camera (10) having a lens directed towards the positioning base (3), wherein each lighting device (4) includes a light-emitting diode.

2. System (1) according to claim 1, wherein said two ultraviolet lighting devices (4) are inclined with respect to the vertical by an angle of between fifty-four and sixty-six degrees.

3. System (1) according to either one of claims 1 and 2, wherein the camera (10) is preferentially at a distance from the positioning base (3) of less than twenty centimetres and the camera (10) has a lens (11) of sixty-five millimetres coupled with an optical extension ring, adapted to provide an optical acquisition precision of less than ten micrometres.

4. System (1) according to any one of the preceding claims, wherein the casing (2) is provided with a door and a door-closure sensor (8) coupled to the electronic card.

5. Method for validating the response compliance of a penetrant testing line for implementing a system according to any one of claims 1 to 4, including the following steps:
- placing (E1) on the positioning base (3) a penetrant-testing reference test specimen including cracks (16) and coming from said penetrant testing line,
- targeting (E2) the camera (10) in a focused manner on the cracks (16) by actuating the motorised linear guide (6),
- illuminating (E3) the cracks (16),
- digitally acquiring (E4) an image of the cracks (16) by means of the camera (10),
- recording said image,
- measuring the main dimensions of each crack (16),
- dimensionally comparing the measurements with reference values,
- sanctioning the response.

6. Method according to claim 5, wherein the duration of illumination of the cracks (16) is substantially equal to the duration of acquisition of the image of the cracks (16).

7. Method according to any one of claims 5 and 6, furthermore including a prior step in which the system (1) is the subject of a reference standardisation by monitoring and calibration using two reference test patterns of different types, one of which is a test pattern with countersinks (13) adapted to standardise the positioning provided by the positioning base (3) and the precision of the measurements, and the other is a test pattern of the USAF1951^{©}) type used for testing intensity, dimension and surface measurements.

8. Method according to any one of claims 5 to 7, furthermore including a prior step in which the system (1) is the subject of reference standardisation using a referencing implemented on the basis of an initial response of the penetrant testing line.

9. Method according to any one of claims 5 to 8, furthermore including a final step of archiving the image, the measurements and the sanction.
